# FASCICULE DE BREVET EUROPEEN

(11) **EP 2 558 334 B1**
(45) Date de publication et mention de la délivrance du brevet: **03.06.2015**
(21) Numéro de dépôt: 11720146.7
(22) Date de dépôt: 12.04.2011
(51) Int. Cl.: B60R 13/02, H01H 13/06, H01H 13/14

(54) **HABILLAGE INTÉRIEUR DE VÉHICULE AUTOMOBILE, PLANCHE DE BORD ET VÉHICULE COMPRENANT UN TEL HABILLAGE**
INNENVERKLEIDUNG EINES KRAFTFAHRZEUGS, ARMATURENBRETT UND FAHRZEUG MIT SOLCH EINER VERKLEIDUNG
INTERIOR TRIM OF A MOTOR VEHICLE, DASHBOARD AND VEHICLE COMPRISING SUCH A TRIM

(30) Priorité: 16.04.2010 FR 1052927
(43) Date de publication de la demande: 20.02.2013
(73) Titulaire: Faurecia Intérieur Industrie, 92000 Nanterre (FR)
(72) Inventeur: OEUVRARD, Jean-François, F-95300 Cergy Pontoise (FR); GOIX, Pierre, F-60240 Le Mesnil Theribus (FR)
(74) Mandataire: Jacobson, Claude
(86) Numéro de dépôt international: PCT/FR2011/050829
(87) Numéro de publication internationale: WO 2011/128572

(56) Documents cités:
- DE-A1- 10 237 719
- DE-A1- 19 708 064
- FR-A1- 2 923 177
- FR-A1- 2 947 220
- FR-A1- 2 947 221
- JP-A- 10 296 757
- US-A1- 2008 012 382

## Description

La présente invention concerne un habillage intérieur de véhicule automobile, du type comprenant un panneau multicouche possédant au moins un support et une peau d'aspect recouvrant le support, l'habillage comprenant un trou traversant le panneau, un commutateur disposé dans le trou et un bouchon de fermeture du trou recouvrant le commutateur, le bouchon permettant d'actionner le commutateur au travers du bouchon.

FR 2 923 177 divulgué un habillage intérieur de véhicule automobile du type précité correspondant au préambule de la revendication 1; dans lequel la peau est thermoformée sur le façon à adhérer à celui-ci.

Néanmoins, un tel habillage ne permet pas une maintenance aisée et à coût réduit.

Un but de l'invention est de proposer un habillage intérieur de véhicule automobile dont la maintenance soit plus aisée et moins coûteuse.

A cet effet, l'invention propose un habillage intérieur de véhicule automobile du type précité, caractérisé en ce que le bouchon est fixé sur la peau au moyen de reliefs complémentaires de fixation par encliquetage prévus sur le bouchon et la peau, de sorte que le bouchon est monté amovible sur la peau.

Selon d'autres modes de réalisation, l'habillage comprend une ou plusieurs des caractéristiques suivantes, prise(s) isolément ou selon toutes les combinaisons techniquement possibles :
- le panneau comprend une couche intermédiaire souple entre le support rigide et la peau flexible ;
- la peau comprend un rebord définissant à la périphérie du trou un dégagement annulaire de réception du bouchon ;
- les reliefs de fixation sont prévus sur une surface interne du dégagement et sur une surface externe du bouchon ;
- le dégagement comprend au moins un relief annulaire ménagé sur une portée axiale du dégagement s'étendant suivant l'axe du trou ;
- le dégagement est étagé et comprend au moins deux portées axiales s'étendant suivant l'axe du trou reliées par une épaulement radial ;
- le bouchon comprend une partie périphérique annulaire de fixation du bouchon sur la peau et une membrane flexible s'étendant en travers de la partie périphérique, au moins un relief de fixation étant prévus sur la partie périphérique ;
- le bouchon est monobloc ;
- le bouchon comprend une partie périphérique formée par une bague rigide et une membrane flexible rapportée sur la bague, notamment par surmoulage de la membrane sur la bague ;
- l'habillage comprend des moyens d'étanchéité entre la peau et le support à la périphérie du trou ;
- les moyens d'étanchéité comprennent une lèvre d'étanchéité venue de matière avec le bouchon et reliée à celui-ci par une région frangible prévue pour se rompre lors du démontage du bouchon ; et
- les moyens d'étanchéité comprennent un joint annulaire rapporté entre la peau et le support à la périphérie du trou.

L'invention concerne également une planche de bord et un véhicule automobile comprenant un habillage tel que défini ci-dessus.

L'invention et ses avantages seront mieux compris à la lecture de la description qui va suivre, donnée uniquement à titre d'exemple, et faite en référence aux dessins annexés, sur lesquels :
- la figure 1 est une vue en coupe d'un habillage intérieur de véhicule automobile selon un premier mode de réalisation de l'invention ;
- les figures 2 à 5 sont des vues analogues à celle de la figure 1 illustrant des étapes successives de fabrication de l'habillage intérieur de la figure 1 ;
- la figure 6 est un vue analogue celle de la figure 1 illustrant le démontage d'un bouchon de l'habillage intérieur ;
- les figures 7 et 8 sont des vues analogues à celle de la figure 1 illustrant des habillages intérieurs selon des deuxième et troisième modes de réalisation de l'invention ; et
- la figure 9 est une vue de détail d'une peau et d'un bouchon d'un habillage selon une variante de réalisation.

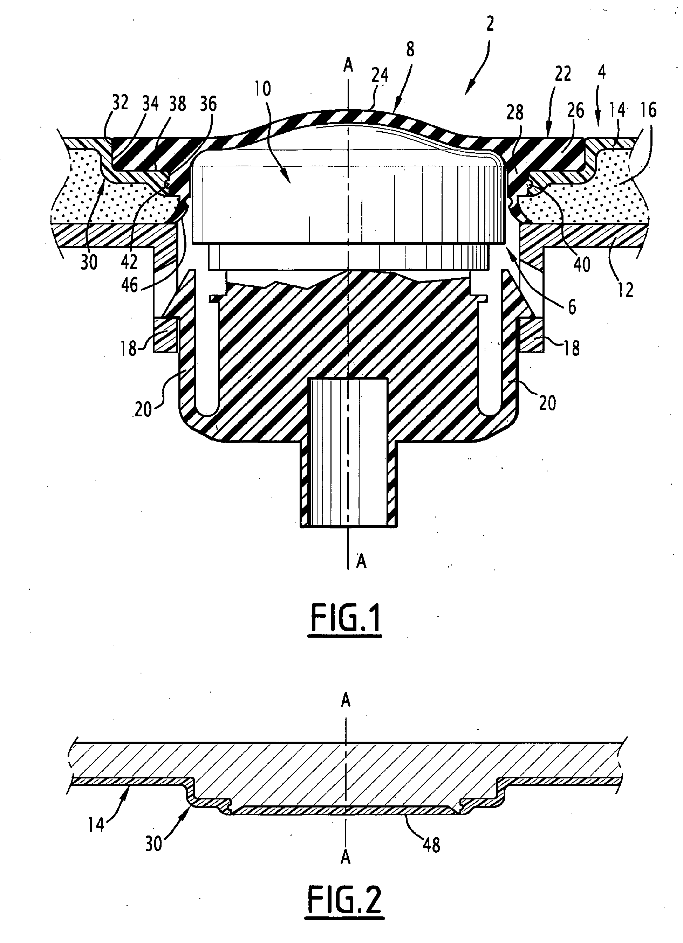

L'habillage 2 intérieur de véhicule automobile représenté sur la figure 1 est destiné à être disposé à l'intérieur de l'habitacle du véhicule automobile. Il s'agit par exemple d'un habillage de planche de bord.

L'habillage 2 comprend un panneau 4, un trou 6 traversant le panneau 4 suivant un axe A, un bouchon 8 fermant le trou 6 et un commutateur 10 fixé sur le panneau 4 à l'intérieur du trou 6, en étant recouvert par le bouchon 8 du côté de la face avant visible du panneau 4 et actionnable au travers de ce bouchon 8.

Le commutateur 10 est relié à une unité de commande d'un organe fonctionnel du véhicule automobile. Le commutateur 10 est par exemple un commutateur marche/arrêt de démarrage du véhicule automobile. Le commutateur 10 peut être un commutateur électromécanique avec un organe de commande mobile. Alternativement, le commutateur I10 peut être d'un autre type, par exemple un commutateur capacitif sans organe mobile.

Le panneau 4 est multicouche. Il comprend en superposition un support 12 et une peau 14 d'aspect recouvrant le support 12. Dans le mode de réalisation illustré, le panneau 4 comprend en outre une couche intermédiaire 16 souple disposée entre le support 12 rigide et la peau 14 flexible.

Le support 12 confère au panneau 4 son galbe général. La peau 14 constitue la couche visible du panneau 4. La couche intermédiaire 16 confère un toucher doux au panneau 4, la peau 14 pouvant être enfoncée au toucher par compression de la couche intermédiaire 16.

La peau 14 est réalisée en une feuille mince en matériau plastique ou naturel, par exemple une couche textile en fibres synthétique et/ou naturelles ou du cuir. La couche intermédiaire 16 peut être constituée d'une mousse ou d'un gel, par exemple une mousse polyuréthane. Le support 12 est par exemple constitué d'un plastique rigide éventuellement renforcé de fibres.

Le support 12 comprend à la périphérie du trou 6 des oreilles 18 percées prévues pour coopérer avec des crochets élastiques 20 du commutateur 10 pour la fixation amovible du commutateur 10 sur le support 12 par encliquetage. Les oreilles 18 font saillie du côté de la face arrière du panneau 4 opposée à la peau 14.

Le bouchon 8 est fixé sur la peau 14 au moyen de reliefs de fixation complémentaires prévus sur le bouchon 8 et la peau 14 de sorte que le bouchon 8 est démontable de la peau 14. Comme cela est visible sur les figures, le bouchon 8 est une pièce distincte du commutateur 10. Le bouchon 8 peut donc être retiré sans enlever le commutateur 10 et ainsi il est possible de contrôler le fonctionnement du commutateur 10 *in situ.* Par ailleurs, le commutateur 10 peut être un élément, standard dont l'aspect n'altère pas celui de l'habillage.

Le bouchon 8 comprend une partie périphérique 22 annulaire de fixation sur la peau 14 et une membrane 24 d'obturation s'étendant en travers de la partie périphérique 22. La partie périphérique 22 est prévue pour assurer la fixation du bouchon 8 sur la peau 14, et la membrane 24 est prévue pour s'étendre transversalement en travers du trou 6.

La membrane 24 est flexible et permet l'activation du commutateur 10 au travers de celle-ci. La portion périphérique 22 est plus rigide de façon à assurer une fixation efficace du bouchon 8 sur la peau 14.

Dans l'exemple illustré sur la figure 1, le bouchon 8 est monobloc. La membrane 24 est venue de matière avec la partie périphérique 22. La membrane 24 est plus mince pour présenter une flexibilité plus grande que la partie périphérique 22 qui est plus épaisse.

La partie périphérique 22 comprend une collerette 26 annulaire et un manchon 28 tubulaire s'étendant axialement suivant l'axe A à partir du bord interne de la collerette 26.

La peau 14 comprend à la périphérie du trou 6 un rebord 30 rentrant vers l'intérieur du panneau 4 en direction du support 12. Le rebord 30 est conformé de façon à définir autour du trou 6, sur la face avant de la peau 6 opposée au support 12, un , dégagement 32 annulaire complémentaire de la partie périphérique 22 du bouchon 8.

Dans l'exemple illustré, le dégagement 32 est étagé de diamètre décroissant en direction du support 12. Le dégagement 32 comprend un première portée 34 axiale de grand diamètre et une deuxième portée 36 axiale de petit diamètre s'étendant suivant l'axe A du trou 6 reliées par un épaulement 38 radial.

La première portée 34 présente un diamètre intérieur sensiblement égal au diamètre extérieur de la collerette 26 de la partie périphérique 22 du bouchon 8. La deuxième portée 36 présente un diamètre intérieur sensiblement égale au diamètre extérieur du manchon 28.

Lorsque le bouchon 8 est inséré dans le trou 6, la partie périphérique 22 du bouchon 8 est reçu dans le dégagement 32 en appui contre l'épaulement 38, la collerette 26 étant reçue dans le tronçon défini par la première portée 34, et le manchon 28 étant engagé dans le tronçon défini par la deuxième portée 36.

De préférence, le bouchon 8 affleure la face avant de la peau 14 à la périphérie du dégagement 32.

Le bouchon 8 et la peau 14 sont munis de reliefs complémentaires de fixation permettant de fixer le bouchon 8 de manière amovible sur la peau 14 par encliquetage.

Dans l'exemple illustré, le bouchon 8 comprend un relief de fixation sous la forme d'une nervure annulaire 40, prévu ici sur la surface externe du manchon 28, et la peau 14 comprend une gorge annulaire 42 complémentaire de la nervure annulaire 40, prévue ici sur la deuxième portée 36 du dégagement 32. En variante, une nervure pourrait être prévue sur la peau 14 et une gorge complémentaire sur le bouchon 8. En option, il est possible de prévoir plusieurs couples de reliefs complémentaires, en prévoyant par exemples plusieurs couples nervure et gorge complémentaires.

Avantageusement, l'habillage 2 comprend des moyens d'étanchéité pour assurer l'étanchéité entre la peau 14 et le support 12 à la périphérie du trou 6.

Dans l'exemple illustré sur les figures 1 et 2, les moyens d'étanchéité comprennent une lèvre 46 d'étanchéité prolongeant axialement le manchon 28 pour venir en contact avec la face avant du support 12 tournée vers la peau 14.

Dans l'exemple illustré sur la figure 1, la lèvre 46 est venue de matière avec le bouchon 8. Elle est reliée à au manchon 28 par une zone frangible, ici sous la forme d'un pont de matière d'épaisseur réduite par rapport à celle du manchon 28 et de la base de la lèvre 46.

Les étapes d'un procédé de fabrication de l'habillage 2 sont représentées aux figures 2 à 5.

Dans une première étape illustrée sur la figure 2, la peau 14 est fabriquée par exemple par thermoformage d'un film en matière thermoplastique sur une matrice présentant une forme correspondant à celle désirée pour la peau 14. La peau 14 est formée avec une ébauche de rebord 30 fermée par un opercule 48. La peau 14 est en variante obtenue par rotomoulage ou par tout autre procédé approprié. En parallèle, on fournit le bouchon 8, par exemple par moulage de matière synthétique, par exemple de silicone.

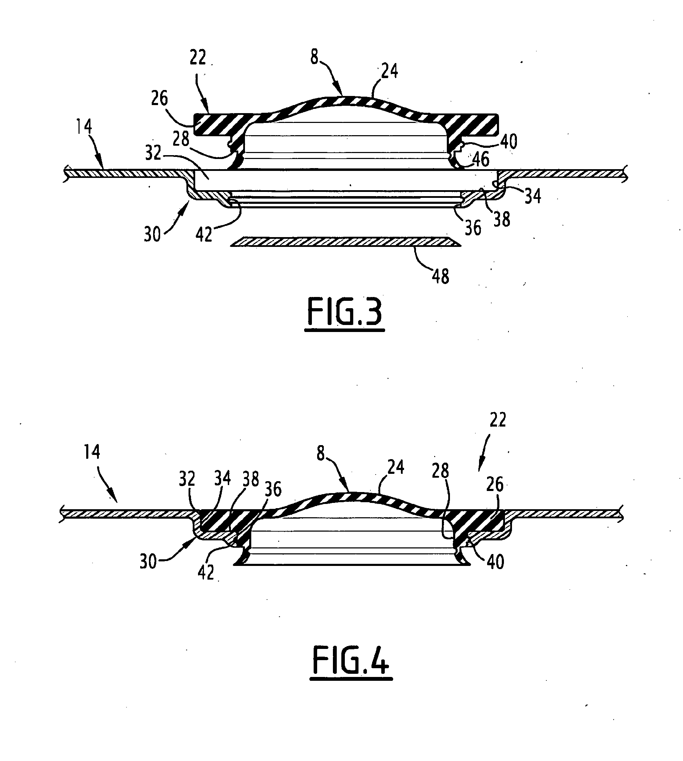

Dans une deuxième étape illustrée sur les figures 3 et 4, on retire l'opercule 48, par exemple en le découpant, puis on fixe le bouchon 8 sur la peau 14 par insertion en force dans le dégagement 32 et encliquetage des reliefs complémentaires (nervure 40 et gorge 42) prévus sur le bouchon 8 et la peau 14.

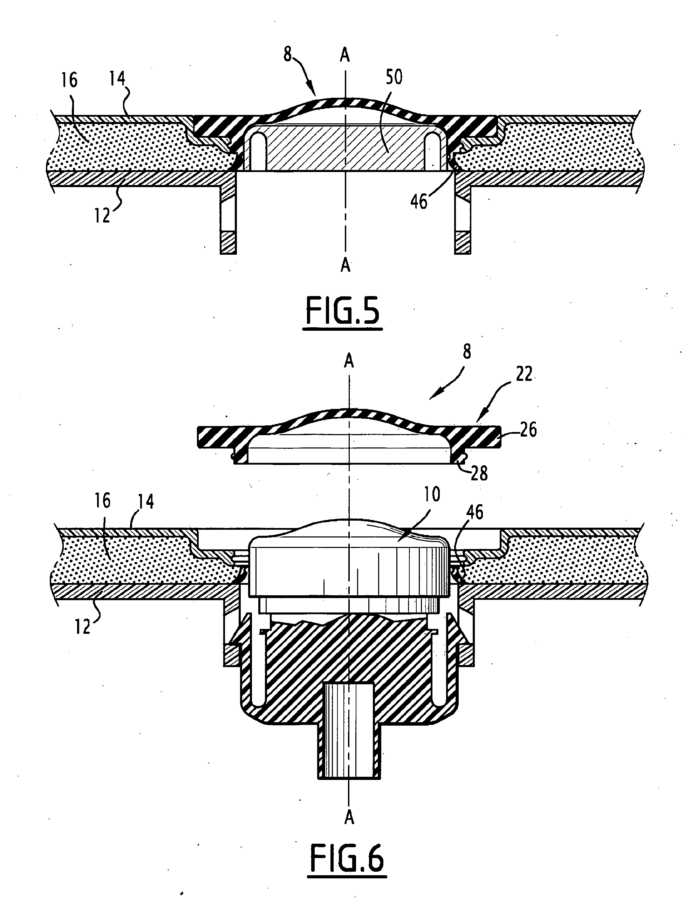

Dans une troisième étape illustrée sur la figure 5, on dispose la peau 14 munie du bouchon 8 et le support 12 dans un moule de manière à former une cavité de moulage entre le support 12 et la peau 14, puis on injecte de la matière entre le support 12 et la peau 14, de façon à obtenir la couche intermédiaire 16.

Lors de l'injection, la lèvre 46 ferme de manière étanche à la matière injectée la paroi latérale du trou 6 et empêche la fuite de matière injectée à l'extérieur.

En option, et comme illustré sur la figure 5, on dispose un insert 50 rigide à l'intérieur du trou 6 sous le bouchon 8 pendant l'injection, l'insert 50 étant prévu pour venir supporter la lèvre 46 et empêcher un mouvement de celle-ci vers l'intérieur du trou 6. Ainsi, on évite que la pression élevée de la matière injectée ne provoque un retournement de la lèvre 46 et un passage de la matière injectée dans le trou 6.

Dans une étape suivante, on encliquette le commutateur 10 sur le support 12, sous le bouchon 8. On aboutit à l'habillage de la figure 1.

Le bouchon 8 peut être démonté simplement en le tirant pour l'extraire de la peau 14. Le démontage du bouchon 8 entraîne le désencliquetage des reliefs de fixation complémentaires (nervure 40 et gorge 42).

La lèvre 46 peut être collée par la couche intermédiaire 16. Néanmoins, la zone frangible se rompt facilement ce qui permet le démontage aisé du bouchon 8.

Un nouveau bouchon analogue au bouchon 8 mais dépourvu de lèvre 46 d'étanchéité peut alors être inséré et fixé sur la peau 12 simplement et uniquement par encliquetage assurant ainsi une fixation sûre et amovible.

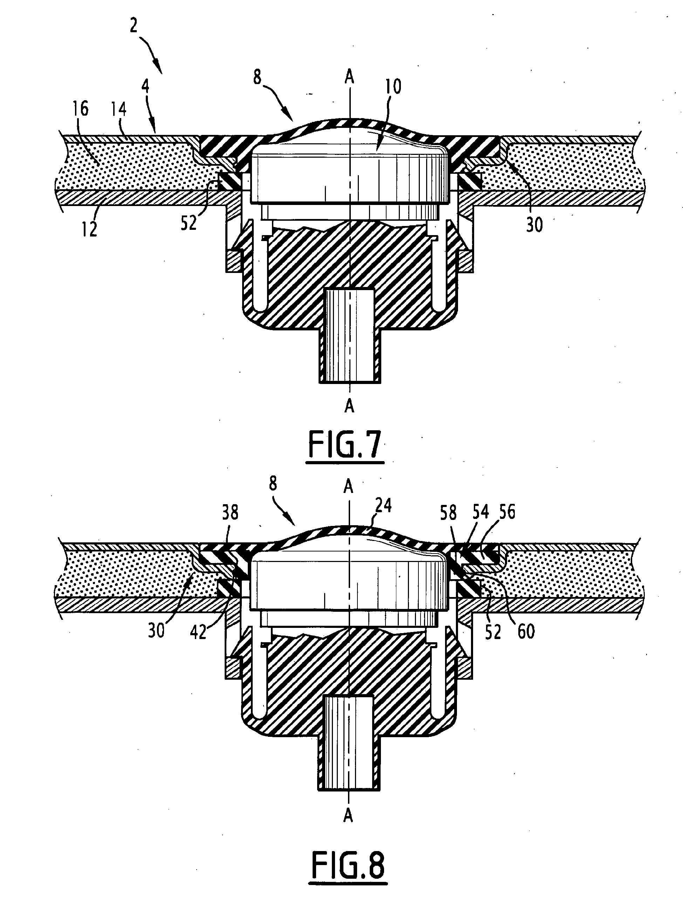

Dans le deuxième mode de réalisation illustré sur la figure 7, le bouchon 8 est dépourvu de lèvre d'étanchéité. Les moyens d'étanchéité comprennent un joint 52 annulaire rapporté entre le rebord 30 de la peau 14 et le support 12.

Dans le troisième mode de réalisation illustré sur la figure 8, le bouchon 8 est composite. Il comprend une bague 54 de fixation réalisée dans un premier matériau rigide et une membrane 24 rapportée sur la bague 54 et réalisée dans un deuxième matériaux moins rigide que le premier matériau, par exemple en silicone.

La bague 54 présente une section en L et comprend une collerette 56 radiale et un manchon 58 tubulaire s'étendant axialement à partir du bord interne de la collerette 56. Le manchon est muni sur sa surface externe d'une nervure 60 annulaire.

Ainsi, la bague 54 permet la fixation du bouchon 8 dans le dégagement 32 définit par le rebord 30, par encliquetage de la nervure 60 dans la gorge 42 de la deuxième portée 38. Bien entendu, ici aussi les positions de la gorge 42 et de la nervure 60 pourraient en variante être inversée.

La bague 54 rigide assure une fixation sûre du bouchon, tandis que la membrane 24 souple permet un actionnement facile du commutateur 10.

La membrane 24 est avantageusement surmoulée sur la bague 54. Dans un mode de réalisation possible, la bague 54 est en matériau plastique rigide et la membrane 24 est en silicone.

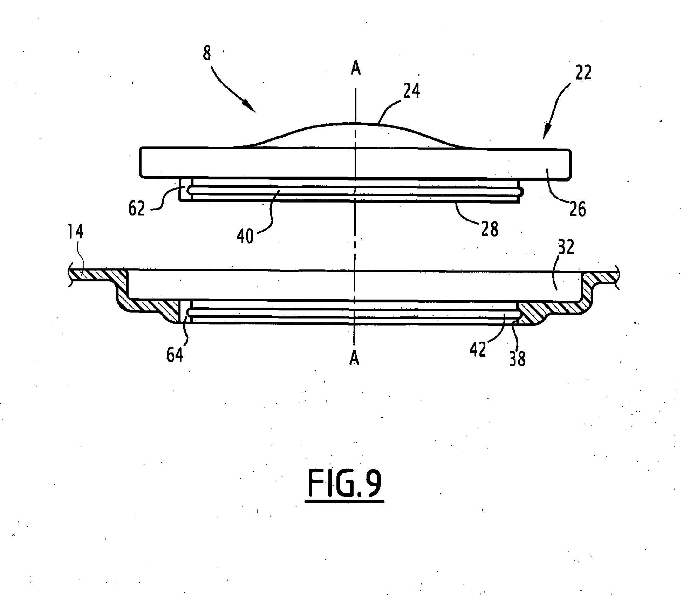

Dans la variante du premier mode de réalisation illustrée sur la figure 9, le bouchon 8 et la peau 14 sont avantageusement munis de moyens d'indexation angulaire permettant d'assurer l'encliquetage du bouchon 8 sur la peau 14 dans une position angulaire déterminée autour de l'axe A du trou 6, par exemple pour assurer l'orientation adéquate d'un pictogramme portée par le bouchon 8 sur la face avant visible de sa membrane 24.

Dans l'exemple illustré, les moyens d'indexation angulaire se présentent sous la forme d'une nervure axiale 62 prévue sur le manchon 28 du bouchon 8, et une gorge axiale 64 complémentaire prévue dans la deuxième portée 36 du rebord 30.

Il est possible de prévoir une ou plusieurs couple nervures et gorges, répartis autour de l'axe A de façon à imposer une position angulaire déterminée.

La fixation du bouchon 8 sur la peau 4 par encliquetage simple permet de disposer le bouchon 8 dans l'orientation angulaire correcte facilement.

Bien entendu, cette variante s'adapte au cas d'un bouchon monobloc tel que dans les modes de réalisation des figures 1 et 7, ou à celui d'un bouchon composite tel que dans le mode de réalisation de la figure 8.

Grâce à l'invention, on obtient un habillage intérieur de véhicule automobile comprenant un trou d'insertion d'un commutateur refermé par un bouchon monté amovible sur la peau au moyens de reliefs complémentaires de fixation par encliquetage de sorte que le bouchon peut être démonté de la peau sans détériorer la peau 8. Le bouchon 8 peut être démonté et remplacé facilement tout en permettant d'obtenir un habillage présentant une qualité satisfaisante et un coût de fabrication faible.

L'invention s'applique aux habillages de planche de bord et plus généralement à tout habillage intérieur de véhicule automobile, comme par exemple aux habillages de pavillon ou de portière.

## Revendications

1. Habillage intérieur de véhicule automobile, du type comprenant un panneau (4) multicouche possédant au moins un support (12) et une peau (14) d'aspect recouvrant le support (12), l'habillage comprenant un trou (6) traversant le panneau (4), un commutateur (10) disposé dans le trou (6) et un bouchon (8) de fermeture du trou (6) recouvrant le commutateur (10), le bouchon (8) permettant d'actionner le commutateur (10) au travers du bouchon (8),
**caractérisé en ce que** le bouchon (8) est fixé sur la peau (14) au moyen de reliefs complémentaires de fixation par encliquetage prévus sur le bouchon (8) et la peau (14), de sorte que le bouchon (8) est monté amovible sur la peau (14).

2. Habillage selon la revendication 1, dans lequel le panneau (4) comprend une couche intermédiaire (16) souple entre le support (12) rigide et la peau (14) flexible.

3. Habillage selon la revendication 1 ou 2, dans lequel la peau (14) comprend un rebord (30) définissant à la périphérie du trou (6) un dégagement (32) annulaire de réception du bouchon (8).

4. Habillage selon la revendication 3, dans lequel les reliefs de fixation (40, 42) sont prévus sur une surface interne (36) du dégagement (32) et sur une surface externe du bouchon (8).

5. Habillage selon la revendication 3 ou 4, dans lequel le dégagement (32) comprend au moins un relief annulaire (42) ménagé sur une portée (36) axiale du dégagement (32) s'étendant suivant l'axe (A) du trou (6).

6. Habillage selon l'une quelconque des revendications 3 à 5, dans lequel le dégagement (32) est étagé et comprend au moins deux portées axiales (34, 36) s'étendant suivant l'axe du trou (6) reliées par une épaulement (38) radial.

7. Habillage selon l'une quelconque des revendications précédentes, dans lequel le bouchon (8) comprend une partie périphérique (22) annulaire de fixation du bouchon (8) sur la peau (4) et une membrane (24) flexible s'étendant en travers de la partie périphérique (22), au moins un relief de fixation (40) étant prévus sur la partie périphérique (22).

8. Habillage selon la revendication 7, dans lequel le bouchon (8) est monobloc.

9. Habillage selon la revendication 7, dans lequel le bouchon (8) comprend une partie périphérique formée par une bague (54) rigide et une membrane (24) flexible rapportée sur la bague (54), notamment par surmoulage de la membrane sur la bague (54)

10. Habillage selon l'une quelconque des revendications précédentes, **caractérisé en ce qu'**il comprend des moyens d'étanchéité entre la peau (14) et le support (12) à la périphérie du trou (6).

11. Habillage selon la revendication 10, **caractérisé en ce que** les moyens d'étanchéité comprennent une lèvre (46) d'étanchéité venue de matière avec le bouchon (8) et reliée à celui-ci par une région frangible prévue pour se rompre lors du démontage du bouchon (8).

12. Habillage selon la revendication 10 ou 11, **caractérisé en ce que** les moyens d'étanchéité comprennent un joint annulaire rapporté entre la peau (14) et le support (12) à la périphérie du trou (6).

13. Planche de bord comprenant un habillage (2) selon l'une quelconque des revendications précédentes.

14. Véhicule automobile comprenant un habillage selon l'une quelconque des revendications 1 à 12.

## Patentansprüche

1. Innenverkleidung für ein Kraftfahrzeug, der Art, die eine mehrschichtige Platte (4) umfasst, die mindestens einen Träger (12) und eine den Träger (12) bedeckende Haut (14) umfasst, wobei die Verkleidung eine durch die Platte (4) hindurchgehende Öffnung (6), einen in der Öffnung (6) angeordneten Schalter (10) und einen Verschluss (8) zum Schließen der Öffnung (6) aufweist, der den Schalter (10) abdeckt, wobei es der Verschluss (8) ermöglicht, den Schalter (10) durch den Verschluss (8) hindurch zu betätigen,
**dadurch gekennzeichnet, dass** der Verschluss (8) mittels komplementärer Einrastbefestigungserhebungen, die am Verschluss (8) und der Haut (14) vorgesehen sind, so an der Haut (14) befestigt ist, dass der Verschluss (8) abnehmbar an der Haut (14) angebracht ist.

2. Verkleidung nach Anspruch 1, wobei die Platte (4) eine nachgiebige Zwischenschicht (16) zwischen dem starren Träger (12) und der flexiblen Haut (14) hat.

3. Verkleidung nach Anspruch 1 oder 2, wobei die Haut (14) einen Rand (30) hat, der am Umfang der Öffnung (6) eine ringförmige Ausnehmung (32) zur Aufnahme des Verschlusses (8) bildet.

4. Verkleidung nach Anspruch 3, wobei die Befestigungserhebungen (40, 42) an einer Innenfläche (36) der Ausnehmung (32) und an einer Außenfläche des Verschlusses (8) vorgesehen sind.

5. Verkleidung nach Anspruch 3 oder 4, wobei die Ausnehmung (32) mindestens eine ringförmige Erhebung (42) hat, die an einem axialen Umfang (36) der Ausnehmung (32) sich entlang der Achse (A) der Öffnung (6) erstreckend ausgebildet ist.

6. Verkleidung nach einem der Ansprüche 3 bis 5, wobei die Ausnehmung (32) gestuft ist und mindestens zwei sich entlang der Achse der Öffnung (6) erstreckende axiale Umfänge (34, 36) hat, die durch eine radiale Schulter (38) verbunden sind.

7. Verkleidung nach einem der vorhergehenden Ansprüche, wobei der Verschluss (8) einen ringförmigen Umfangsbereich (22) zur Befestigung des Verschlusses (8) an der Haut (14) und eine flexible Membran (24) hat, die sich quer über den Umfangsbereich (22) erstreckt, wobei mindestens eine Befestigungserhebung (40) am Umfangsbereich (22) vorgesehen ist.

8. Verkleidung nach Anspruch 7, wobei der Verschluss (8) aus einem Stück besteht.

9. Verkleidung nach Anspruch 7, wobei der Verschluss (8) einen Umfangsbereich hat, der durch einen starren Ring (54) und eine flexible Membran (24) gebildet ist, die am Ring (54), insbesondere durch Überformen des Rings (54) mit der Membran angebracht ist.

10. Verkleidung nach einem der vorhergehenden Ansprüche, **dadurch gekennzeichnet, dass** sie am Umfang der Öffnung (6) Dichtigkeitseinrichtungen zwischen der Haut (14) und dem Träger (12) hat.

11. Verkleidung nach Anspruch 10, **dadurch gekennzeichnet, dass** die Dichtigkeitseinrichtungen eine Dichtungslippe (46) haben, die aus demselben Material wie der Verschluss (8) besteht und mit diesem durch einen zerbrechbaren Bereich verbunden ist, der dazu vorgesehen ist, bei der Demontage des Verschlusses (8) zu zerbrechen.

12. Verkleidung nach Anspruch 10 oder 11, **dadurch gekennzeichnet, dass** die Dichtigkeitseinrichtungen eine Ringdichtung aufweisen, die am Umfang der Öffnung (6) zwischen der Haut (14) und dem Träger (12) angebracht ist.

13. Armaturenbrett mit einer Verkleidung (2) nach einem der vorhergehenden Ansprüche.

14. Kraftfahrzeug mit einer Verkleidung nach einem der Ansprüche 1 bis 12.

## Claims

1. A motor vehicle interior trim, of the type comprising a multilayer panel (4) having at least one support (12) and an appearance skin (14) covering the support (12), the trim comprising a hole (6) extending through the panel (4), a switch (10) positioned in the hole (6) and a plug (8) for closing the hole (6) and covering the switch (10), the plug (8) allowing actuation of the switch (10) through the plug (8),
**characterized in that** the plug (8) is attached on the skin (14) by means of mating snap-fit attachment reliefs provided on the plug (8) and the skin (14) so that the plug (8) is removably mounted on the skin (14).

2. The trim according to claim 1, wherein the panel (4) comprises a flexible intermediate layer (16) between the rigid support (12) and the flexible skin (14).

3. The trim according to claim 1 or 2, wherein the skin (14) comprises an edge (30) defining at the periphery of the hole (6) a ring-shaped clearance space (32) for receiving the plug (8).

4. The trim according to claim 3, wherein the attachment reliefs (40, 42) are provided on an internal surface (36) of the clearance space (32) and on an external surface of the plug (8).

5. The trim according to claim 3 or 4, wherein the clearance space (32) comprises at least one ring-shaped relief (42) made on an axial span (36) of the clearance space (32) extending along the axis (A) of the hole (6).

6. The trim according to any of claims 3 to 5, wherein the clearance space (32) is staged and comprises at least two axial spans (34, 36) extending along the axis of the hole (6) connected through a radial shoulder (38).

7. The trim according to any of the preceding claims, wherein the plug (8) comprises a ring-shaped peripheral portion (22) of the plug (8) on the skin (14) and a flexible membrane (24) extending through the peripheral portion (22), at least one attachment relief (40) being provided on the peripheral portion (22).

8. The trim according to claim 7, wherein the plug (8) is made in one piece.

9. The trim according to claim 7, wherein the plug (8) comprises a peripheral portion formed by a rigid ring (54) and a flexible membrane (24) added onto the ring (54) notably by overmolding the membrane on the ring (54).

10. The trim according to any of the preceding claims, **characterized in that** it comprises sealing means between the skin (14) and the support (12) at the periphery of the hole (6).

11. The trim according to claim 10, **characterized in that** the sealing means comprise a sealing lip (46) made in a single piece of material with the plug (8) and connected to the latter through a frangible area configured to break when taking off the plug (8).

12. The trim according to claim 10 or 11, **characterized in that** the sealing means comprise a ring-shaped gasket added on between the skin (14) and the support (12) at the periphery of the hole (6).

13. A dashboard comprising a trim (2) according to any of the preceding claims.

14. A motor vehicle comprising a trim according to any of claims 1 to 12.
